# EUROPEAN PATENT SPECIFICATION

(11) **EP 3 282 811 B1**
(45) Date of publication and mention of the grant of the patent: **03.07.2019**
(21) Application number: 15891083.6
(22) Date of filing: 05.05.2015
(51) Int. Cl.: H04W 88/02, H04W 52/36

(54) **TRANSMISSION POWER ADJUSTMENT METHOD AND APPARATUS**
VERFAHREN UND VORRICHTUNG ZUR EINSTELLUNG DER ÜBERTRAGUNGSLEISTUNG
PROCÉDÉ ET APPAREIL DE RÉGLAGE DE PUISSANCE D'ÉMISSION

(43) Date of publication of application: 14.02.2018
(73) Proprietor: Huawei Technologies Co., Ltd., Longgang District Shenzhen, Guangdong 518129 (CN)
(72) Inventor: SUN, Shangbang, Shenzhen Guangdong 518129 (CN)
(74) Representative: Epping - Hermann - Fischer
(86) International application number: PCT/CN2015/078330
(87) International publication number: WO 2016/176831

(56) References cited:
- EP-A1- 2 693 815
- WO-A1-2012/122116
- CN-A- 102 917 449
- CN-A- 103 139 891
- US-A1- 2012 190 402
- US-A1- 2013 176 876
- US-A1- 2013 331 046
- US-A1- 2014 036 827
- US-A1- 2014 155 119
- US-A1- 2014 370 830

## Description

### TECHNICAL FIELD

The present invention relates to the field of mobile terminal technologies, and in particular, to a transmit power adjustment method and apparatus.

### BACKGROUND

With development of wireless networks, mobile terminals are more widely applied and have more transmit sources. For example, transmit sources in some mobile terminals include a primary card modem (modem), a secondary card modem, and the like, making it more difficult to control radiation by mobile terminals to human bodies. Currently, impact of radiation on human bodies is measured in a specific absorption rate (Specific Absorption Rate, specific absorption rate). The SAR represents electromagnetic power absorbed or consumed by human tissues per unit mass. A lower SAR indicates a less amount of radiation absorbed by a human body. To control radiation by a mobile terminal to a human body, it is stipulated that radiation generated by a mobile terminal cannot exceed a standard SAR value.

Usually, higher communication quality of a mobile terminal needs larger transmit power, and generates more radiation. Currently, to ensure that radiation generated by transmit sources in a mobile terminal when the transmit sources are working simultaneously does not exceed the standard SAR value, generally, maximum transmit power of each transmit source in the mobile terminal is restricted when the mobile terminal is produced.

When a mobile terminal having multiple transmit sources is in a scenario of weak signals, only if all transmit sources in the mobile terminal are working, and actual transmit power of each transmit power is less than maximum transmit power set for each transmit source when the mobile terminal is produced, it can be ensured that radiation generated by the mobile terminal does not exceed the standard SAR value. However, if only a minority of transmit sources in the mobile terminal are working, for example, when only one transmit source is working, the transmit source needs relatively large transmit power to ensure communication quality in weak signals. Because radiation generated by one transmit source is far less than the standard SAR value, in this case, there is room for improvement in communication quality of the mobile terminal. However, restricted by a limit of transmit power of the transmit source when the mobile terminal is produced, actual transmit power of the transmit source can only be maintained in a relatively low interval, resulting in poor communication quality of the mobile terminal.

US 2014/155119 A1 discusses a wireless device that has a plurality of radio systems. The current priority of each of the radio systems is determined. An upper bound for the transmit power of each of the radio systems is set in dependence on at least the current priorities of the radio systems and a current maximum permitted transmit power of the wireless device. The upper bounds for the transmit power of each of the radio systems are variable over time and are set such that the sum of the upper bounds does not exceed the current maximum permitted transmit power of the wireless device. For each of the radio systems, the transmit power of that radio system is limited such that the respective upper bound for the transmit power for that radio system is not exceeded.

EP 2693815 A1 discloses methods for maximum output level reporting by a mobile terminal in a mobile communication system. An apparatus is provided for performing these methods, and computer readable media the instructions of which cause the apparatus to perform the methods described herein. In order to allow for maximum output level reporting, a power management related power backoff value is first calculated for one radio technology by referring to a reception quality level set for communication via the other radio technology; thereafter a lower and upper bounds of a maximum output power level is calculated, then the maximum output power level (P_{CMAX}) for communication is set within the determined lower and upper bounds and finally the set maximum output power level is reported to a base station wherein the lower bound (P_{CMAX_L}) may be calculated using MPR = 0dB, A-MPR = 0dB, and optionally ΔT_{c} = 0dB.

US 2013/176876 A1 discloses radio control units that concurrently perform two or more communications using two or more different communication schemes. Transmission power detection units detect the values of transmission power used for the communications that the radio control units perform using the respective communication schemes. A transmission power management unit obtains the sum of specific absorption rates associated with the respective communications, based on the values of transmission power thus detected by the transmission power detection units. Then, when the thus obtained sum of specific absorption rates exceeds a predetermined reference value, the transmission power management unit instructs protocol control units to perform the communications in a time-division manner in order for the respective communications using the two or more communication schemes to be non-concurrently performed.

US 2014/036827 A1 discloses a method and an apparatus for controlling transmitting power and relates to the field of communications. The method includes: setting, according to a transmission state of data transmission using a first access technology, a power reduction value of transmitting power for data transmission using a second access technology; and controlling, according to the power reduction value, transmitting power for data transmission using the second access technology. The apparatus includes: a setting module, configured to set, according to a transmission state of data transmission using a first access technology, a power reduction value for transmitting power for data transmission using a second access technology; and a controlling module, configured to control, according to the power reduction value, the transmitting power for data transmission using the second access technology.

WO 2012/122116 A1 discloses systems, methods and apparatus for providing transmission power limit back-off for Specific Absorption Rate (SAR) compliance. A method implemented in a wireless communication apparatus is provided. The method includes receiving an indication of at least one operating mode indicative of a proximity and an orientation of at least one transmitting antenna of the wireless communication apparatus. The method further includes selecting from a plurality of transformations associated with the at least one operating mode. The method further includes applying a selected transformation to adjust a relationship between a power transmission level of a first transmitter and a power transmission level of a second transmitter. The method further includes determining a target power transmission level of the first transmitter based on the adjusted relationship and a current power transmission level of the second transmitter.

US 2014/370830 A1 discloses a system and method that may dynamically control the total RF power emissions of a mobile device. The method may include determining the local RF operating situation of the mobile device; setting a maximum power limit according to the local RF operating situation; and/or adjusting an active transmitted power of the mobile device within the maximum power limit. The local RF operating situation may be determined based upon (1) the measuring of a matching of the mobile device's radio antenna(s); (2) currently active application(s); (3) the number/type of active radios; (4) frequency or wavelength of transmissions; (5) network, relay, or node RF operating or exposure conditions; and/or (6) a power control process. The mobile device may be hand-held device, HomeNodeB, or other device capable of RF communications. The local RF operation situation and/or available headroom may be communicated to a network base station or node to facilitate enhanced mobile device performance.

US 2013/331046 A1 discloses an information handling device, including: one or more processors; one or more antennas, a communication element, and a memory device that stores instructions executed by the one or more processors, the instructions being executable by the one or more processors to: recognize a location within which the information handling device is operating through wireless communication received via the communication element; and modulate, based on which location the information handling device is operating within, a dynamic power reduction of transmission power through the antenna.

CN 102917449 A discloses a terminal, comprising a first communication module used for voice communication service, a second communication module used for data communication service, a relationship establishing unit, a state detection unit, a power acquiring unit, a power searching unit, and a power adjusting unit, wherein the relationship establishing unit is used for establishing a power correction relationship table between a first theoretic radio frequency emitting power of the first communication module and a second theoretic radio frequency emitting power of the second communication module based on the preset emitting power requirements; the state detection unit is used for detecting the states of the first communication module and the second communication module; the power acquiring unit is used for acquiring a first real-time radio frequency emitting power; the power searching unit is used for searching a corresponding second theoretic radio frequency emitting power from the power correction relationship table; and the power adjusting unit is used for adjusting the real-time power based on the second theoretic radio frequency emitting power. A method for adjusting the radio frequency emitting power of the terminal is disclosed. The problems of SAR test, module mutual interference and terminal power consumption may be solved, and the voice communication and data communication may be available at the same time.

### SUMMARY

Embodiments of the present invention provide a transmit power adjustment method and apparatus, to improve communication quality of a mobile terminal if the communication quality of the mobile terminal has room for improvement.

To achieve the foregoing objective, the following technical solutions are used in the embodiments of the present invention:
According to a first aspect, an embodiment of the present invention provides a transmit power adjustment method, where the method is applied to a mobile terminal, the mobile terminal includes at least two transmit sources, and the method includes:
obtaining a current status information combination, where the current status information combination includes a current status of each transmit source of the at least two transmit sources;
obtaining restricted power of each transmit source of the at least two transmit sources in the current status information combination, where under a precondition that radiation generated by the mobile terminal does not exceed a standard specific absorption rate SAR value, the restricted power of each transmit source of the at least two transmit sources is a maximum transmit power that is of each transmit source of the at least two transmit sources and that is separately permitted in the current status information combination; and
separately adjusting the maximum transmit power of each transmit source of the at least two transmit sources to the restricted power of each transmit source of the at least two transmit sources in the current status information combination, wherein the mobile terminal further includes a Subscriber Identity Module SIM card module; and before the obtaining a current status information combination, the method further includes:
obtaining a mobile country code MCC of a primary card by using the SIM card module; and
the obtaining restricted power of each transmit source of the at least two transmit sources in the current status information combination; and the separately adjusting the maximum transmit power of each transmit source of the at least two transmit sources to the restricted power of each transmit source of the at least two transmit sources in the current status information combination include:
   obtaining restricted power of each transmit source of the at least two transmit sources that corresponds to both the MCC and the current status information combination; and
   separately adjusting the maximum transmit power of each transmit source of the at least two transmit sources to the restricted power of each transmit source of the at least two transmit sources that corresponds to both the MCC and the current status information combination.

With reference to the first aspect, in a first possible implemented manner, before the obtaining a current status information combination, the method further includes:
combining statuses of each transmit source of the at least two transmit sources to obtain at least two status information combinations, where the status information combinations include a status of each transmit source of the at least two transmit sources;
adjusting transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination; and
determining the adjusted transmit power of each transmit source of the at least two transmit sources in each status information combination to the restricted power of each transmit source of the at least two transmit sources.

With reference to the first aspect or the first possible implemented manner in the first aspect, in a second possible implemented manner,
the transmit source includes a Wireless Fidelity WiFi module, a primary card modem, and a secondary card modem;
a status of the WiFi module is a disabled state, a WiFi connection state, or a WiFi hotspot state;
a status of the primary card modem is a primary card non-working state or a primary card working state in different standards and different bands; and
a status of the secondary card modem is a secondary card non-working state or a secondary card working state in different standards and different bands.

With reference to the second possible implemented manner in the first aspect, in a third possible implemented manner, the current status information combination includes:
obtaining a current status of each of the WiFi module, the primary card modem, and the secondary card modem; and
determining the current status information combination by means of the current status of each of the WiFi module, the primary card modem, and the secondary card modem. According to a second aspect, an embodiment of the present invention provides a transmit power adjustment apparatus, where the apparatus is applied to a mobile terminal, the mobile terminal includes at least two transmit sources, and the apparatus includes:
an obtaining unit, configured to: obtain a current status information combination, where the current status information combination includes a current status of each transmit source of the at least two transmit sources; obtain restricted power of each transmit source of the at least two transmit sources in the current status information combination, where under a precondition that radiation generated by the mobile terminal does not exceed a standard specific absorption rate SAR value, the restricted power of each transmit source of the at least two transmit sources is a maximum transmit power that is of each transmit source of the at least two transmit sources and that is separately permitted in the current status information combination, wherein the obtaining unit is further configured to obtain a mobile country code MCC of a primary card by using a SIM card module;
the obtaining unit is further configured to obtain restricted power of each transmit source of the at least two transmit sources that corresponds to both the MCC and the current status information combination; and
   an adjustment unit, configured to separately adjust the maximum transmit power of each transmit source of the at least two transmit sources to the restricted power of each transmit source of the at least two transmit sources in the current status information combination that is obtained by the obtaining unit, wherein the adjustment unit is further configured to separately adjust the maximum transmit power of each transmit source of the at least two transmit sources to the restricted power of each transmit source of the at least two transmit sources that corresponds to both the MCC and the current status information combination.

With reference to the second aspect, in a first possible implemented manner, the apparatus further includes:
a combination unit, configured to combine statuses of each transmit source of the at least two transmit sources to obtain at least two status information combinations, where the status information combinations include a status of each transmit source of the at least two transmit sources; where
the adjustment unit is further configured to adjust transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination; and
a determining unit, configured to determine the transmit power of each transmit source of the at least two transmit sources that is adjusted by the adjustment unit in each status information combination to the restricted power of each transmit source of the at least two transmit sources.

With reference to the second aspect or the first possible implemented manner in the second aspect, in a second possible implemented manner,
the transmit source includes a Wireless Fidelity WiFi module, a primary card modem, and a secondary card modem;
a status of the WiFi module is a disabled state, a WiFi connection state, or a WiFi hotspot state;
a status of the primary card modem is a primary card non-working state or a primary card working state in different standards and different bands; and
a status of the secondary card modem is a secondary card non-working state or a secondary card working state in different standards and different bands.

With reference to the second possible implemented manner in the second aspect, in a third possible implemented manner,
the obtaining unit is further configured to obtain a current status of each of the WiFi module, the primary card modem, and the secondary card modem; and
the determining unit is further configured to determine the current status information combination by means of the current status of each of the WiFi module, the primary card modem, and the secondary card modem that is obtained by the obtaining unit.

According to a third aspect, an embodiment, as an example useful for understanding the invention, provides a transmit power adjustment apparatus, where the apparatus is applied to a mobile terminal, the mobile terminal includes at least two transmit sources, and the apparatus includes:
a memory, configured to store information including a program instruction; and
a processor, where the processor is coupled to the memory and configured to control execution of the program instruction, and is specifically configured to: obtain a current status information combination, where the current status information combination includes a current status of each transmit source of the at least two transmit sources; obtain restricted power of each transmit source of the at least two transmit sources in the current status information combination, where under a precondition that radiation generated by the mobile terminal does not exceed a standard specific absorption rate SAR value, the restricted power of each transmit source of the at least two transmit sources is a maximum transmit power that is of each transmit source of the at least two transmit sources and that is separately permitted in the current status information combination; and separately adjust the maximum transmit power of each transmit source of the at least two transmit sources to the restricted power of each transmit source of the at least two transmit sources in the current status information combination.

With reference to the third aspect, in a first possible implemented manner,
the processor is further configured to: combine statuses of each transmit source of the at least two transmit sources to obtain at least two status information combinations, where the status information combinations include a status of each transmit source of the at least two transmit sources; adjust transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination; and determine the adjusted transmit power of each transmit source of the at least two transmit sources in each status information combination to the restricted power of each transmit source of the at least two transmit sources; and
the memory is further configured to store the adjusted restricted power that is of each transmit source of the at least two transmit sources in each status information combination and that is determined by the processor.

With reference to the third aspect or the first possible implemented manner in the third aspect, in a second possible implemented manner, the transmit source includes a Wireless Fidelity WiFi module, a primary card modem, and a secondary card modem;
a status of the WiFi module is a disabled state, a WiFi connection state, or a WiFi hotspot state;
a status of the primary card modem is a primary card non-working state or a primary card working state in different standards and different bands; and
a status of the secondary card modem is a secondary card non-working state or a secondary card working state in different standards and different bands.

With reference to the second possible implemented manner in the third aspect, in a third possible implemented manner,
the processor is further configured to: obtain a current status of each of the WiFi module, the primary card modem, and the secondary card modem; and determine the current status information combination by means of the current status of each of the WiFi module, the primary card modem, and the secondary card modem.

With reference to any one of the third aspect or the foregoing possible implemented manners in the third aspect, in a fourth possible implemented manner,
the processor is further configured to obtain a mobile country code MCC of a primary card by using a SIM card module; and
the processor is further configured to: obtain restricted power of each transmit source of the at least two transmit sources that corresponds to both the MCC and the current status information combination; and separately adjust the maximum transmit power of each transmit source of the at least two transmit sources to the restricted power of each transmit source of the at least two transmit sources that corresponds to both the MCC and the current status information combination.

According to the transmit power adjustment method and apparatus provided in the embodiments of the present invention, a current status information combination is obtained first, where the current status information combination includes a current status of each transmit source of at least two transmit sources; and restricted power of each transmit source of the at least two transmit sources in the current status information combination is obtained then, where under a precondition that radiation generated by a mobile terminal does not exceed a standard SAR value, the restricted power of each transmit source of the at least two transmit sources is a maximum permitted transmit power of each transmit source of the at least two transmit sources, so that maximum transmit power of each transmit source of the at least two transmit sources is separately adjusted to the restricted power of each transmit source of the at least two transmit sources in the current status information combination. Compared with a prior-art problem that when a mobile terminal having multiple transmit sources is in a scenario of weak signals, if only a minority of transmit sources are working, even if radiation generated by the mobile terminal is far less than a standard SAR value, transmit power of the minority of transmit sources that are working still can only be maintained in a relatively low interval, which results in poor communication quality of the mobile terminal, according to the embodiments of the present invention, when maximum transmit power of each transmit source is set, a current status of each transmit source is referenced, and according to a current status information combination, the maximum transmit power of each transmit source is separately adjusted to, when the radiation generated by the mobile terminal does not exceed the standard SAR value, a maximum permitted transmit power of each transmit source, so that the current status of each transmit source is adapted to its adjusted maximum transmit power. If the radiation generated by the mobile terminal does not exceed the standard SAR value, communication quality of the mobile terminal is ensured to the greatest extent. Therefore, compared with the prior art, by means of the embodiments of the present invention, under a precondition that radiation generated by a mobile terminal does not exceed a standard SAR value, communication quality of the mobile terminal can be improved when there is room for improvement in the communication quality of the mobile terminal.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a logical structure of a transmit power adjustment system according to an embodiment of the present invention;
FIG. 2 is a method flowchart of a transmit power adjustment method according to an embodiment of the present invention;
FIG. 3 is a method flowchart of another transmit power adjustment method according to an embodiment of the present invention;
FIG. 4 is a method flowchart of another transmit power adjustment method according to an embodiment of the present invention;
FIG. 5 is a schematic diagram of a logical structure of a transmit power adjustment apparatus according to an embodiment of the present invention;
FIG. 6 is a schematic diagram of a logical structure of another transmit power adjustment apparatus according to an embodiment of the present invention; and
FIG. 7 is a schematic diagram of a logical structure of a mobile terminal in a transmit power adjustment method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

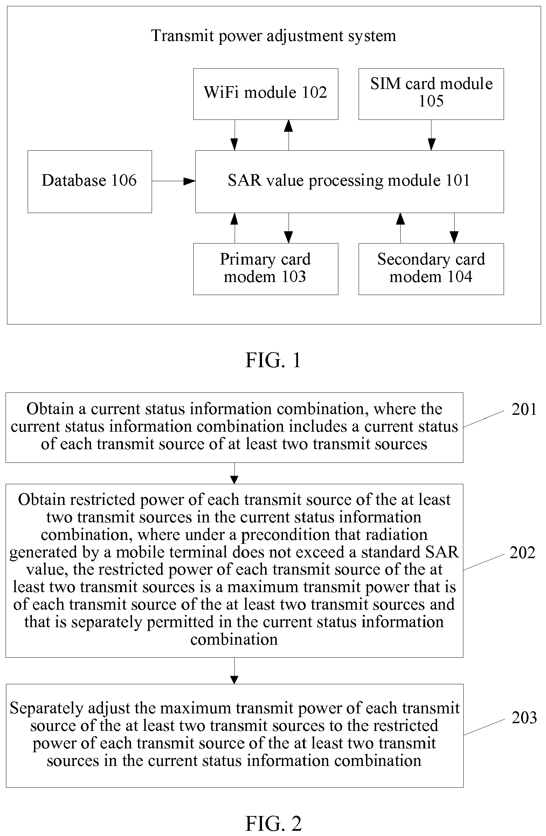

An embodiment, as an example useful for understanding the invention, provides a transmit power adjustment system, and the system is applied to a mobile terminal. As shown in FIG. 1, the system includes an SAR value processing module 101, a WiFi (Wireless-Fidelity, Wireless Fidelity) module 102, a primary card modem 103, a secondary card modem 104, a SIM (Subscriber Identity Module, Subscriber Identity Module) card module 105, and a database 106. The WiFi module 102, the primary card modem 103, and the secondary card modem 104 each are transmit sources that can generate radiation. In this embodiment of the present invention, a primary card represents a primary SIM card in the mobile terminal, and a secondary card represents a secondary SIM card in the mobile terminal.

The SAR value processing module 101 is configured to: obtain a current status information combination, where the status information combination includes a current status of each transmit source in the mobile terminal; and search, according to the status information combination, the database 106 for restricted power of each transmit source in the status information combination, so as to adjust maximum transmit power of each transmit source to the restricted power of each transmit source under the status information combination.

The WiFi module 102 is configured to report a current WiFi status to the SAR value processing module 101.

The primary card modem 103 is configured to report a current primary card status to the SAR value processing module 101.

The secondary card modem 104 is configured to report a current secondary card status to the SAR value processing module 101.

The SIM card module 105 is configured to report an MCC (mobile country code, mobile country code) of a primary card to the SAR value processing module 101.

The database 106 is configured to store restricted power of each transmit source in each status information combination corresponding to an MCC of a primary card.

It is noteworthy that FIG. 1 is only a schematic diagram of an example of a transmit power adjustment system, and an transmit power adjustment method provided in the embodiments of the present invention is not only applicable to the transmit power adjustment system shown in FIG. 1. With reference to FIG. 1, an embodiment of the present invention provides a transmit power adjustment method, the method is applied to a mobile terminal, the mobile terminal includes at least two transmit sources, and the method is executed by the SAR value processing module in FIG. 1. As shown in FIG. 2, the method includes the following steps.

201: Obtain a current status information combination, where the current status information combination includes a current status of each transmit source of at least two transmit sources.

With reference to the transmit power adjustment system shown in FIG. 1, the WiFi module, the primary card modem, and the secondary card modem each report a current status to the SAR value processing module in the mobile terminal, so that the SAR value processing module adjusts maximum transmit power of each transmit source by means of a current status information combination formed by the current status of each of the WiFi module, the primary card modem, and the secondary card modem.

It is noteworthy that each time a status of a transmit source changes, the transmit source whose status changes reports a changed status to the SAR value processing module, so that the SAR value processing module may obtain a current status of each transmit source. For example, a status of the WiFi module changes from a first state to a second state, and the WiFi module needs to report the second state to the SAR value processing module, so that when the status of the transmit source changes, the SAR value processing module adjusts maximum transmit power of each transmit source.

202: Obtain restricted power of each transmit source of the at least two transmit sources in the current status information combination, where under a precondition that radiation generated by a mobile terminal does not exceed a standard SAR value, the restricted power of each transmit source of the at least two transmit sources is a maximum transmit power that is of each transmit source of the at least two transmit sources and that is separately permitted in the current status information combination.

203: Separately adjust the maximum transmit power of each transmit source of the at least two transmit sources to the restricted power of each transmit source of the at least two transmit sources in the current status information combination.

Each transmit source has a different status and needs different maximum transmit power. In addition, radiation generated by an entire mobile terminal needs to be considered. Therefore, a current status of each transmit source, and a status information combination formed by the current status of each transmit source need to be referenced, so as to determine maximum transmit power of each transmit source.

After the SAR value processing module separately adjusts the maximum transmit power of each transmit source to the restricted power of each transmit source in the current status information combination, actual transmit power of each transmit source may reach a maximum transmit power that is currently permitted respectively, so that if radiation generated by the mobile terminal does not exceed the standard SAR value, communication quality of each transmit source in the mobile terminal is ensured to the greatest extent.

According to the transmit power adjustment method provided in this embodiment of the present invention, a current status information combination is obtained first, where the current status information combination includes a current status of each transmit source of at least two transmit sources; and restricted power of each transmit source of the at least two transmit sources in the current status information combination is obtained then, where under a precondition that radiation generated by a mobile terminal does not exceed a standard SAR value, the restricted power of each transmit source of the at least two transmit sources is a maximum permitted transmit power of each transmit source of the at least two transmit sources, so that maximum transmit power of each transmit source of the at least two transmit sources is separately adjusted to the restricted power of each transmit source of the at least two transmit sources in the current status information combination. Compared with a prior-art problem that when a mobile terminal having multiple transmit sources is in a scenario of weak signals, if only a minority of transmit sources are working, even if radiation generated by the mobile terminal is far less than a standard SAR value, transmit power of the minority of transmit sources that are working still can only be maintained in a relatively low interval, which results in poor communication quality of the mobile terminal, according to this embodiment of the present invention, when maximum transmit power of each transmit source is set, a current status of each transmit source is referenced, and according to a current status information combination, the maximum transmit power of each transmit source is separately adjusted to, when the radiation generated by the mobile terminal does not exceed the standard SAR value, a maximum permitted transmit power of each transmit source, so that the current status of each transmit source is adapted to its adjusted maximum transmit power. If the radiation generated by the mobile terminal does not exceed the standard SAR value, communication quality of the mobile terminal is ensured to the greatest extent. Therefore, compared with the prior art, by means of this embodiment of the present invention, under a precondition that radiation generated by a mobile terminal does not exceed a standard SAR value, communication quality of the mobile terminal can be improved when there is room for improvement in the communication quality of the mobile terminal.

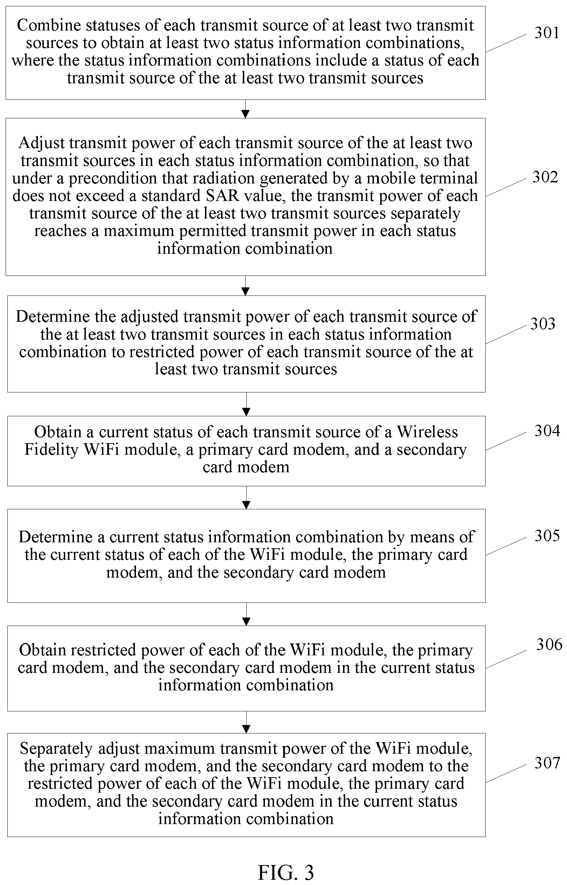

With reference to the foregoing descriptions, an embodiment of the present invention further provides a transmit power adjustment method. In this embodiment, methods of how to adjust maximum transmit power of each transmit source, and before adjusting the maximum transmit power of each transmit source, how to determine maximum transmit power of each transmit source of at least two transmit sources in each status information combination are specifically described. As shown in FIG. 3, the method includes the following steps.

301: Combine statuses of each transmit source of at least two transmit sources to obtain at least two status information combinations, where the status information combinations include a status of each transmit source of the at least two transmit sources.

It is noteworthy that a transmit source in a mobile terminal includes a WiFi module, a primary card modem, and a secondary card modem.

A status of the WiFi module is a disabled state, a WiFi connection state, or a WiFi hotspot state. The disabled state refers to that the mobile terminal does not enable WiFi, the WiFi connection state refers to that the mobile terminal accesses a network by means of WiFi, and the WiFi hotspot state refers to that the mobile terminal is used as a WiFi hotspot and provides Internet services for other devices.

A status of the primary card modem is a primary card non-working state or a primary card working state in different standards and different bands.

The primary card modem refers to a modem corresponding to a primary card in a dual card dual standby mobile terminal, and standards of the primary card include 2G (2-Generation wireless telephone technology, 2-Generation wireless telephone technology), 3G (3rd-Generation, 3rd-Generation), and 4G (the 4th Generation mobile communication technology, the 4th Generation mobile communication technology). Each standard includes multiple bands. For example, 4G supports Band (Band)1/Band3/Band7/Band38/Band39/Band40/Band41 and the like of LTE (Long Term Evolution, Long Term Evolution). Different radio frequency modulation technologies are used in different standards, and transmit frequencies of different bands are different, so that a primary card generates different radiation when working in different standards and different bands.

The primary card non-working state refers to that a primary card is in a standby state, only receives network paging information, does not need uplink transmission, and basically does not generate radiation. The primary card working state refers to that a primary card of a mobile terminal is currently performing communication. The primary card may use different standards or bands when performing services, and generates different radiation. For example, when performing a calling service, the primary card may use Band 1 of 3G, or may use GSM (Global System for Mobile Communication, Global System for Mobile Communications) 1800 of 2G.

A status of the secondary card modem is a secondary card working state or a secondary card non-working state in different standards and different bands. The secondary card modem refers to a modem corresponding to a secondary card in a dual card dual standby mobile terminal. Nowadays, in a dual card dual standby mobile phone, the secondary card modem has relatively weak functions, and generally, a standard of the secondary card only supports 2G. 2G includes multiple different bands, and the secondary card generates different radiation when working in different bands of 2G. The secondary card non-working state refers to that a secondary card is in a standby state, only receives network paging information, does not need uplink transmission, and basically does not generate radiation. The secondary card working state refers to that a secondary card of a mobile terminal currently is performing communication. When performing a service, the secondary card may be in different standards or bands, and generates different radiation.

It is further noteworthy that the status information combination includes a status of the WiFi module, a status of the primary card modem, and a status of the secondary card modem. For example, a status information combination is a status information combination formed by a WiFi disabled state, a primary card working state in an LTE Band1 of 4G, and a secondary card working state of GSM1800 of 2G.

302: Adjust transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination.

It is noteworthy that generally by measuring radiation generated by each transmit source in a mobile terminal to a position point, for example, radiation generated by each transmit source to a human brain when a user answers a phone call by using a mobile terminal, whether the radiation generated by the mobile terminal exceeds the standard SAR value is determined. After a status information combination is determined, transmit power of each transmit source is adjusted, so that superimposed radiation generated by each transmit source to the position point does not exceed the standard SAR value, and if the radiation generated by the mobile terminal to the position point does not exceed the standard SAR value, the mobile terminal reaches optimal communication quality.

It is further noteworthy that a transmit source needs different transmit power in different statuses. For example, if the WiFi module is in the disabled state, the WiFi module does not generate radiation, but both the primary card and the secondary card are working, maximum transmit power of the primary card modem and the secondary card modem may be increased appropriately, as long as radiation generated by the primary card modem and the secondary card modem does not exceed the standard SAR value. If WiFi is in the disabled state, the secondary card is in the secondary card non-working state, and the primary card is performing a call service, the WiFi module and the secondary card modem do not generate radiation, and transmit power is approximately 0, which is equivalent to that only one transmit source in the mobile terminal is working, so that maximum transmit power of the primary card modem may be increased, as long as radiation generated by the primary card modem does not exceed the standard SAR. In this way, the primary card reaches optimal communication quality, and that radiation generated by the mobile terminal does not exceed the standard SAR is also ensured.

With reference to the foregoing descriptions, it may be understood that if there is only one transmit source in the mobile terminal, which is equivalent to the case described above in which only one transmit source in the mobile terminal is working, in this case, it only needs to be ensured that radiation generated by the transmit source does not exceed the standard SAR value.

303: Determine the adjusted transmit power of each transmit source of the at least two transmit sources in each status information combination to restricted power of each transmit source of the at least two transmit sources.

It may be understood that after the restricted power of each transmit source in each status information combination is determined, the SAR value processing module stores the determined restricted power of each transmit source in each status information combination in a database.

It is noteworthy that the foregoing steps 301 to 303 are a process in which the restricted power of each transmit source in the mobile terminal is determined and stored. After the restricted power of each transmit source in the mobile terminal in each status information combination is stored, when the mobile terminal is actually used, maximum transmit power of each transmit source is adjusted in real time according to a current status of each transmit source in the mobile terminal.

304: Obtain a current status of each of a WiFi module, a primary card modem, and a secondary card modem.

With reference to the transmit power adjustment system shown in FIG. 1, when a status of each transmit source changes, each transmit source reports a changed status to the SAR value processing module, so that the SAR value processing module may obtain the current status of each of the WiFi module, the primary card modem, and the secondary card modem.

305: Determine a current status information combination by means of the current status of each of the WiFi module, the primary card modem, and the secondary card modem.

It is noteworthy that the current status information combination is formed by the current status of each of the WiFi module, the primary card modem, and the secondary card modem. The current status information combination is one of status information combinations stored in the database. By means of the current status information combination, restricted power of each transmit source in the current status information combination may be found in the database.

306: Obtain restricted power of each of the WiFi module, the primary card modem, and the secondary card modem in the current status information combination.

307: Separately adjust maximum transmit power of the WiFi module, the primary card modem, and the secondary card modem to the restricted power of each of the WiFi module, the primary card modem, and the secondary card modem in the current status information combination.

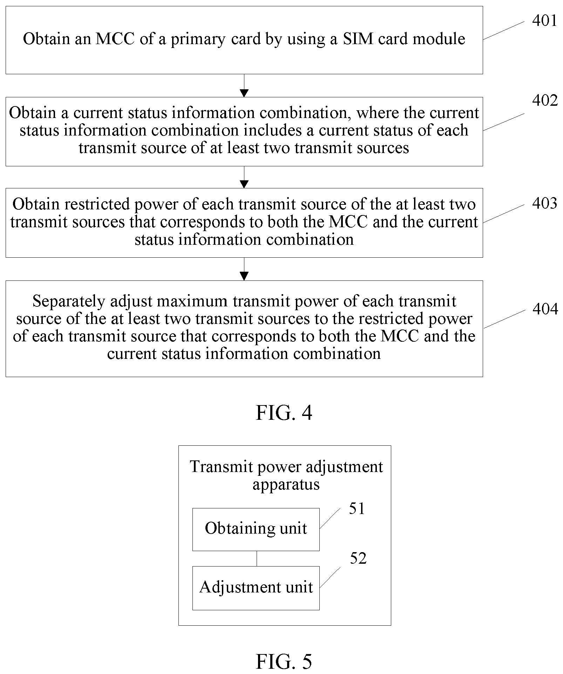

According to the transmit power adjustment method provided in this embodiment of the present invention, statuses of each transmit source of at least two transmit sources are combined first to obtain at least two status information combinations, transmit power of each transmit source of the at least two transmit sources is adjusted then in each status information combination, so that under a precondition that radiation generated by a mobile terminal does not exceed a standard SAR value, the transmit power of each transmit source of the at least two transmit sources separately reaches a maximum permitted transmit power in each status information combination, and the transmit power of each transmit source adjusted in each status information combination is determined to restricted power of each transmit source. Later, when the mobile terminal is normally working, a current status of each of a WiFi module, a primary card modem, and a secondary card modem is obtained, a current status information combination is determined by means of the current status of each of the WiFi module, the primary card modem, and the secondary card modem, and restricted power of each transmit source of the at least two transmit sources in the current status information combination is obtained, thereby separately adjusting the maximum transmit power of each transmit source to the restricted power of each transmit source in the current status information combination. The transmit power of each transmit source in each status information combination is adjusted in advance, and the determined restricted power of each transmit source in each status information combination is stored in a database. When the maximum transmit power of each transmit source is adjusted, the restricted power of each transmit source corresponding to the current status information combination may be directly obtained from the database, so that the maximum transmit power is adjusted more conveniently and simply. Communication quality of the mobile terminal can be ensured by adjusting the maximum transmit power of each transmit source in the current status information combination to the maximum value of the permitted transmit power of each transmit source when radiation generated by the mobile terminal does not exceed a standard SAR value. With reference to the method procedure shown in FIG. 2, an embodiment of the present invention further provides a transmit power adjustment method. In this embodiment, a mobile terminal further includes a SIM card module. As shown in FIG. 4, the method includes the following steps.

401: Obtain an MCC of a primary card by using a SIM card module.

The MCC is used to represent a country to which a primary card in a mobile terminal belongs. Each country requires a different SAR value; therefore, when maximum transmit power is adjusted for each transmit source, a standard SAR value of the country to which the primary card in the mobile terminal belongs needs to be further referenced.

402: Obtain a current status information combination, where the current status information combination includes a current status of each transmit source of at least two transmit sources.

403: Obtain restricted power of each transmit source of the at least two transmit sources that corresponds to both the MCC and the current status information combination.

It may be understood that in this embodiment, a database stores restricted power of each transmit source corresponding to each status information combination under different MCCs.

404: Separately adjust maximum transmit power of each transmit source of the at least two transmit sources to the restricted power of each transmit source that corresponds to both the MCC and the current status information combination.

According to the transmit power adjustment method provided in this embodiment of the present invention, an MCC of a primary card is obtained by using a SIM card module, a current status information combination is further obtained, and restricted power of each transmit source of at least two transmit sources that corresponds to both the MCC and the current status information combination is obtained then, so that maximum transmit power of each transmit source of the at least two transmit sources is separately adjust to the restricted power of each transmit source that corresponds to both the MCC and the current status information combination. Because different countries specify different standard SAR values, according to this embodiment of the present invention, a country to which a primary card belongs is determined according to an MCC of the primary card. If power generated by a mobile terminal does not exceed a standard SAR value specified by the country to which the primary card belongs, maximum transmit power of each transmit source is adjusted to a maximum permitted transmit power under a current status combination, and communication quality of the mobile terminal is ensured. Even if in a mobile terminal, a primary card of a country having a high standard of an SAR value is replaced with a primary card of a country having a low standard of an SAR value, according to this embodiment of the present invention, maximum transmit power of each transmit source in the mobile terminal is adjusted according to the country to which the current primary card belongs, so that radiation generated by the mobile terminal does not exceed a standard SAR value of the country to which the current primary card belongs.

With reference to the method procedures shown in FIG. 2 to FIG. 4, an embodiment of the present invention further provides a transmit power adjustment apparatus. The apparatus is applied to a mobile terminal, and the mobile terminal includes at least two transmit sources. As shown in FIG. 5, the apparatus includes an obtaining unit 51 and an adjustment unit 52.

The obtaining unit 51 is configured to: obtain a current status information combination, where the current status information combination includes a current status of each transmit source of the at least two transmit sources; obtain restricted power of each transmit source of the at least two transmit sources in the current status information combination, where under a precondition that radiation generated by the mobile terminal does not exceed a standard specific absorption rate SAR value, the restricted power of each transmit source of the at least two transmit sources is a maximum transmit power that is of each transmit source of the at least two transmit sources and that is separately permitted in the current status information combination.

The adjustment unit 52 is configured to separately adjust the maximum transmit power of each transmit source of the at least two transmit sources to the restricted power of each transmit source of the at least two transmit sources in the current status information combination that is obtained by the obtaining unit 51.

According to the transmit power adjustment apparatus provided in this embodiment of the present invention, the obtaining unit first obtains a current status information combination, where the current status information combination includes a current status of each transmit source of at least two transmit sources; and then obtains restricted power of each transmit source of the at least two transmit sources in the current status information combination, where under a precondition that radiation generated by a mobile terminal does not exceed a standard SAR value, the restricted power of each transmit source of the at least two transmit sources is a maximum permitted transmit power of each transmit source of the at least two transmit sources, so that the adjustment unit separately adjusts the maximum transmit power of each transmit source of the at least two transmit sources to the restricted power of each transmit source of the at least two transmit sources in the current status information combination. Compared with a prior-art problem that when a mobile terminal having multiple transmit sources is in a scenario of weak signals, if only a minority of transmit sources are working, even if radiation generated by the mobile terminal is far less than a standard SAR value, transmit power of the minority of transmit sources that are working still can only be maintained in a relatively low interval, which results in poor communication quality of the mobile terminal, according to this embodiment of the present invention, when maximum transmit power of each transmit source is set, a current status of each transmit source is referenced, and according to a current status information combination, the maximum transmit power of each transmit source is separately adjusted to, when the radiation generated by the mobile terminal does not exceed the standard SAR value, a maximum permitted transmit power of each transmit source, so that the current status of each transmit source is adapted to its adjusted maximum transmit power. If the radiation generated by the mobile terminal does not exceed the standard SAR value, communication quality of the mobile terminal is ensured to the greatest extent. Therefore, compared with the prior art, by means of this embodiment of the present invention, under a precondition that radiation generated by a mobile terminal does not exceed a standard SAR value, communication quality of the mobile terminal can be improved when there is room for improvement in the communication quality of the mobile terminal.

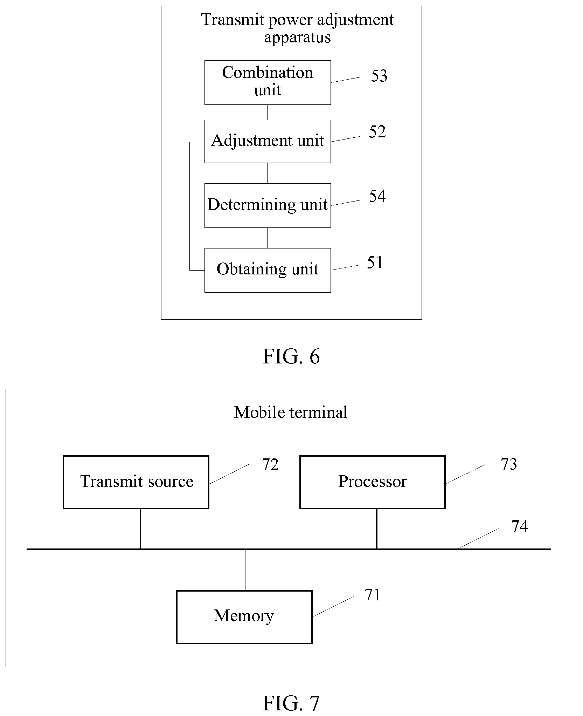

Further, with reference to FIG. 5, an embodiment of the present invention further provides a transmit power adjustment apparatus. As shown in FIG. 6, the apparatus further includes a combination unit 53 and a determining unit 54.

The combination unit 53 is configured to combine statuses of each transmit source of the at least two transmit sources to obtain at least two status information combinations, where the status information combinations include a status of each transmit source.

It is noteworthy that a transmit source includes a Wireless Fidelity WiFi module, a primary card modem, and a secondary card modem.

A status of the WiFi module is a disabled state, a WiFi connection state, or a WiFi hotspot state.

A status of the primary card modem is a primary card non-working state or a primary card working state in different standards and different bands.

A status of the secondary card modem is a secondary card non-working state or a secondary card working state in different standards and different bands.

The adjustment unit 52 is further configured to adjust transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination.

The determining unit 54 is configured to determine the transmit power of each transmit source of the at least two transmit sources that is adjusted by the adjustment unit 52 in each status information combination to the restricted power of each transmit source of the at least two transmit sources. Further, the obtaining unit 51 is further configured to obtain a current status of each of the WiFi module, the primary card modem, and the secondary card modem.

The determining unit 54 is further configured to determine the current status information combination by means of the current status of each of the WiFi module, the primary card modem, and the secondary card modem that is obtained by the obtaining unit 51.

Optionally, the obtaining unit 51 is further configured to obtain a mobile country code MCC of a primary card by using a SIM card module.

The obtaining unit 51 is further configured to obtain restricted power of each transmit source of the at least two transmit sources that corresponds to both the MCC and the current status information combination.

The adjustment unit 52 is further configured to separately adjust the maximum transmit power of each transmit source of the at least two transmit sources to the restricted power, obtained by the obtaining unit 51, of each transmit source that corresponds to both the MCC and the current status information combination.

According to the transmit power adjustment apparatus provided in this embodiment of the present invention, the obtaining unit obtains an MCC of a primary card by using a SIM card module, obtains a current status of each transmit source of at least two transmit sources, further obtains a current status information combination by means of the current status of each transmit source of the at least two transmit sources, and then obtains restricted power of each transmit source of the at least two transmit sources that corresponds to both the MCC and the current status information combination, so that the adjustment unit separately adjusts the maximum transmit power of each transmit source to the restricted power of each transmit source that corresponds to both the MCC and the current status information combination. Because different countries specify different standard SAR values, according to the present invention, a country to which a primary card belongs is determined according to an MCC of the primary card. If power generated by a mobile terminal does not exceed a standard SAR value specified by the country to which the primary card belongs, maximum transmit power of each transmit source is adjusted to a maximum permitted transmit power under a current status combination, and communication quality of the mobile terminal is ensured. Even if in a mobile terminal, a primary card of a country having a high standard of an SAR value is replaced with a primary card of a country having a low standard of an SAR value, according to the present invention, maximum transmit power of each transmit source in the mobile terminal is adjusted according to the country to which the current primary card belongs, so that radiation generated by the mobile terminal does not exceed a standard SAR value of the country to which the current primary card belongs.

As shown in FIG. 7, FIG. 7 is a schematic structural diagram of hardware of the mobile terminal described in FIG. 2. The mobile terminal may include a memory 71, a transmit source 72, a processor 73, and a bus 74. The memory 71, the transmit source 72, and the processor 73 are in communication connection by using the bus 74.

The memory 71 may be a read-only memory (Read Only Memory, ROM), a static storage device, a dynamic storage device, or a random access memory (Random Access Memory, RAM). The memory 71 may store an operating system and another application program. When implementing the technical solution provided in this embodiment of the present invention by means of software or firmware, program code for implementing the technical solution provided in this embodiment of the present invention is stored in the memory 71 and is executed by the processor 73.

The processor 73 may be a general central processing unit (Central Processing Unit, CPU), a microprocessor, an application specific integrated circuit (Application Specific Integrated Circuit, ASIC), or one or more integrated circuits, so as to execute a related program to implement the technical solution provided in this embodiment of the present invention.

The bus 74 may include a channel for transmitting information between components (such as the memory 71, the transmit source 72, and the processor 73) of the apparatus.

It should be noted that although the hardware shown in FIG. 7 only shows the memory 71, the transmit source 72, the processor 73, and the bus 74, in a specific implementation process, a person skilled in the art should understand that the terminal further includes another device that is necessary for implementing normal running. In addition, a person skilled in the art should understand that according to a specific requirement, the terminal may further include a hardware device for implementing another function.

Specifically, when the mobile terminal shown in FIG. 7 is configured to implement the apparatus shown in the embodiment of FIG. 5, the processor 73 in the apparatus is coupled to the memory 71 and configured to control execution of a program instruction, and is specifically configured to: obtain a current status information combination, where the current status information combination includes a current status of each transmit source 72 of at least two transmit sources 72; obtain restricted power of each transmit source 72 of the at least two transmit sources 72 in the current status information combination, where under a precondition that radiation generated by the mobile terminal does not exceed a standard specific absorption rate SAR value, the restricted power of each transmit source 72 of the at least two transmit sources 72 is a maximum transmit power that is of each transmit source 72 of the at least two transmit sources 72 and that is separately permitted in the current status information combination; and separately adjust the maximum transmit power of each transmit source 72 of the at least two transmit sources 72 to the restricted power of each transmit source 72 of the at least two transmit sources 72 in the current status information combination.

It is noteworthy that the mobile terminal includes at least two transmit sources 72, but FIG. 7 only shows one transmit source for an example. In an actual case, the mobile terminal includes multiple transmit sources 72.

According to the transmit power adjustment apparatus provided in the embodiments of the present invention, the processor obtains a current status information combination, where the current status information combination includes a current status of each transmit source of at least two transmit sources; and then obtains restricted power of each transmit source of the at least two transmit sources in the current status information combination, where under a precondition that radiation generated by the mobile terminal does not exceed a standard SAR value, the restricted power of each transmit source of the at least two transmit sources is a maximum permitted transmit power of each transmit source of the at least two transmit sources, so as to separately adjust the maximum transmit power of each transmit source of the at least two transmit sources to the restricted power of each transmit source of the at least two transmit sources in the current status information combination. Compared with a prior-art problem that when a mobile terminal having multiple transmit sources is in a scenario of weak signals, if only a minority of transmit sources are working, even if radiation generated by the mobile terminal is far less than a standard SAR value, transmit power of the minority of transmit sources that are working still can only be maintained in a relatively low interval, which results in poor communication quality of the mobile terminal, according to this embodiment of the present invention, when maximum transmit power of each transmit source is set, a current status of each transmit source is referenced, and according to a current status information combination, the maximum transmit power of each transmit source is separately adjusted to, when the radiation generated by the mobile terminal does not exceed the standard SAR value, a maximum permitted transmit power of each transmit source, so that the current status of each transmit source is adapted to its adjusted maximum transmit power. If the radiation generated by the mobile terminal does not exceed the standard SAR value, communication quality of the mobile terminal is ensured to the greatest extent. Therefore, compared with the prior art, by means of this embodiment of the present invention, under a precondition that radiation generated by a mobile terminal does not exceed a standard SAR value, communication quality of the mobile terminal can be improved when there is room for improvement in the communication quality of the mobile terminal.

The processor 73 is further configured to: combine statuses of each transmit source 72 of the at least two transmit sources 72 to obtain at least two status information combinations, where the status information combinations include a status of each transmit source 72 of the at least two transmit sources 72; adjust transmit power of each transmit source 72 of the at least two transmit sources 72 in each status information combination, so that under a precondition that radiation generated by the mobile terminal does not exceed a standard SAR value, the transmit power of each transmit source 72 of the at least two transmit sources 72 separately reaches a maximum permitted transmit power in each status information combination; and determine the adjusted transmit power of each transmit source 72 of the at least two transmit sources 72 in each status information combination to the restricted power of each transmit source 72 of the at least two transmit sources 72.

The memory 71 is further configured to store the adjusted restricted power that is of each transmit source 72 of the at least two transmit sources in each status information combination and that is determined by the processor 73.

It is noteworthy that the transmit source 72 includes a Wireless Fidelity WiFi module, a primary card modem, and a secondary card modem.

A status of the WiFi module is a disabled state, a WiFi connection state, or a WiFi hotspot state.

A status of the primary card modem is a primary card non-working state or a primary card working state in different standards and different bands.

A status of the secondary card modem is a secondary card non-working state or a secondary card working state in different standards and different bands.

Further, the processor 73 is further configured to: obtain a current status of each of the WiFi module, the primary card modem, and the secondary card modem; and determine the current status information combination by means of the current status of each of the WiFi module, the primary card modem, and the secondary card modem.

Optionally, the processor 73 is further configured to obtain an MCC of a primary card by using a SIM card module.

The processor 73 is further configured to: obtain restricted power of each transmit source of the at least two transmit sources 72 that corresponds to both the MCC and the current status information combination; and separately adjust the maximum transmit power of each transmit source of the at least two transmit sources 72 to the restricted power of each transmit source of the at least two transmit sources 72 that corresponds to both the MCC and the current status information combination.

According to the transmit power adjustment apparatus provided in this embodiment of the present invention, the processor obtains an MCC of a primary card by using a SIM card module, obtains a current status of each transmit source of at least two transmit sources, further obtains a current status information combination by means of the current status of each transmit source of the at least two transmit sources, and then obtains restricted power of each transmit source of the at least two transmit sources that corresponds to both the MCC and the current status information combination, so that the processor separately adjusts the maximum transmit power of each transmit source of the at least two transmit sources to the restricted power of each transmit source that corresponds to both the MCC and the current status information combination. Because different countries specify different standard SAR values, according to the present invention, a country to which a primary card belongs is determined according to an MCC of the primary card. If power generated by a mobile terminal does not exceed a standard SAR value specified by the country to which the primary card belongs, maximum transmit power of each transmit source is adjusted to a maximum permitted transmit power under a current status combination, and communication quality of the mobile terminal is ensured. Even if in a mobile terminal, a primary card of a country having a high standard of an SAR value is replaced with a primary card of a country having a low standard of an SAR value, according to the present invention, maximum transmit power of each transmit source in the mobile terminal is adjusted according to the country to which the current primary card belongs, so that radiation generated by the mobile terminal does not exceed a standard SAR value of the country to which the current primary card belongs.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A transmit power adjustment method, wherein the method is applied to a mobile terminal, the mobile terminal comprises at least two transmit sources, and the method comprises:
obtaining a current status information combination (201), wherein the current status information combination comprises a current status of each transmit source of the at least two transmit sources;
obtaining restricted power of each transmit source of the at least two transmit sources in the current status information combination (202), wherein under a precondition that radiation generated by the mobile terminal does not exceed a standard specific absorption rate, SAR, value, the restricted power of each transmit source of the at least two transmit sources is a maximum transmit power that is of each transmit source of the at least two transmit sources and that is separately permitted in the current status information combination; and
separately adjusting the maximum transmit power of each transmit source of the at least two transmit sources to the restricted power of each transmit source of the at least two transmit sources in the current status information combination (203), wherein the mobile terminal further comprises a Subscriber Identity Module, SIM, card module; and before the obtaining a current status information combination, the method further comprises:
obtaining a mobile country code, MCC, of a primary card by using the SIM card module (401); and
the obtaining restricted power of each transmit source of the at least two transmit sources in the current status information combination; and the separately adjusting the maximum transmit power of each transmit source of the at least two transmit sources to the restricted power of each transmit source of the at least two transmit sources in the current status information combination comprise:
obtaining (403) restricted power of each transmit source of the at least two transmit sources that corresponds to both the MCC and the current status information combination; and
separately adjusting (404) the maximum transmit power of each transmit source of the at least two transmit sources to the restricted power of each transmit source of the at least two transmit sources that corresponds to both the MCC and the current status information combination.

2. The transmit power adjustment method according to claim 1, wherein before the obtaining a current status information combination, the method further comprises:
combining statuses of each transmit source of the at least two transmit sources to obtain at least two status information combinations (301), wherein the status information combinations comprise a status of each transmit source of the at least two transmit sources;
adjusting transmit power of each transmit source of the at least two transmit sources in each status information combination (302), so that under a precondition that radiation generated by the mobile terminal does not exceed a standard SAR value, the transmit power of each transmit source of the at least two transmit sources separately reaches a maximum permitted transmit power in each status information combination; and
determining (303) the adjusted transmit power of each transmit source of the at least two transmit sources in each status information combination to the restricted power of each transmit source of the at least two transmit sources.

3. The transmit power adjustment method according to claim 1 or 2, wherein
the transmit source comprises a Wireless Fidelity, WiFi, module, a primary card modem, and a secondary card modem;
a status of the WiFi module is a disabled state, a WiFi connection state, or a WiFi hotspot state;
a status of the primary card modem is a primary card non-working state or a primary card working state in different standards and different bands; and
a status of the secondary card modem is a secondary card non-working state or a secondary card working state in different standards and different bands.

4. The transmit power adjustment method according to claim 3, wherein the obtaining a current status information combination comprises:
obtaining a current status of each of the WiFi module, the primary card modem, and the secondary card modem (304); and
determining (305) the current status information combination by means of the current status of each of the WiFi module, the primary card modem, and the secondary card modem.

5. A software product stored in a computer-readable storage medium, comprising instructions for instructing a processor to perform all of the steps of the method according to any one of claims 1 to 4.

6. A transmit power adjustment apparatus, wherein the apparatus is applied to a mobile terminal, the mobile terminal comprises at least two transmit sources, and the apparatus comprises:
an obtaining unit (51), configured to: obtain a current status information combination, wherein the current status information combination comprises a current status of each transmit source of the at least two transmit sources; obtain restricted power of each transmit source of the at least two transmit sources in the current status information combination, wherein under a precondition that radiation generated by the mobile terminal does not exceed a standard specific absorption rate, SAR, value, the restricted power of each transmit source of the at least two transmit sources is a maximum transmit power that is of each transmit source of the at least two transmit sources and that is separately permitted in the current status information combination, wherein the obtaining unit (51) is further configured to obtain a mobile country code, MCC, of a primary card by using a Subscriber Identity Module, SIM, card module;
the obtaining unit (51) is further configured to obtain restricted power of each transmit source of the at least two transmit sources that corresponds to both the MCC and the current status information combination; and
an adjustment unit (52), configured to separately adjust the maximum transmit power of each transmit source of the at least two transmit sources to the restricted power of each transmit source of the at least two transmit sources in the current status information combination that is obtained by the obtaining unit (51), wherein the adjustment unit (52) is further configured to separately adjust the maximum transmit power of each transmit source of the at least two transmit sources to the restricted power of each transmit source of the at least two transmit sources that corresponds to both the MCC and the current status information combination.

7. The transmit power adjustment apparatus according to claim 6, wherein the apparatus further comprises:
a combination unit (53), configured to combine statuses of each transmit source of the at least two transmit sources to obtain at least two status information combinations, wherein the status information combinations comprise a status of each transmit source of the at least two transmit sources; wherein
the adjustment unit (52) is further configured to adjust transmit power of each transmit source of the at least two transmit sources in each status information combination, so that under a precondition that radiation generated by the mobile terminal does not exceed a standard SAR value, the transmit power of each transmit source of the at least two transmit sources separately reaches a maximum permitted transmit power in each status information combination; and
a determining unit (54), configured to determine the transmit power of each transmit source of the at least two transmit sources that is adjusted by the adjustment unit (52) in each status information combination to the restricted power of each transmit source of the at least two transmit sources.

8. The transmit power adjustment apparatus according to claim 6 or 7, wherein
the transmit source comprises a Wireless Fidelity, WiFi, module, a primary card modem, and a secondary card modem;
a status of the WiFi module is a disabled state, a WiFi connection state, or a WiFi hotspot state;
a status of the primary card modem is a primary card non-working state or a primary card working state in different standards and different bands; and
a status of the secondary card modem is a secondary card non-working state or a secondary card working state in different standards and different bands.

9. The transmit power adjustment apparatus according to claim 8, wherein
the obtaining unit (51) is further configured to obtain a current status of each of the WiFi module, the primary card modem, and the secondary card modem; and
the determining unit (54) is further configured to determine the current status information combination by means of the current status of each of the WiFi module, the primary card modem, and the secondary card modem that is obtained by the obtaining unit (51).

## Patentansprüche

1. Verfahren zur Anpassung von Sendeleistung, wobei das Verfahren auf ein mobiles Endgerät angewendet wird, das mobile Endgerät mindestens zwei Sendequellen umfasst, und das Verfahren umfasst:
Abrufen einer Kombination von aktuellen Statusinformationen (201), wobei die Kombination von aktuellen Statusinformationen einen aktuellen Status jeder Sendequelle der mindestens zwei Sendequellen umfasst;
Abrufen einer eingeschränkten Leistung jeder Sendequelle der mindestens zwei Sendequellen in der Kombination von aktuellen Statusinformationen (202), wobei unter einer Vorbedingung, dass vom mobilen Endgerät erzeugte Strahlung einen Standardwert einer spezifischen Absorptionsrate, SAR, nicht überschreitet, die eingeschränkte Leistung jeder Sendequelle der mindestens zwei Sendequellen eine maximale Sendeleistung ist, die von jeder Sendequelle der mindestens zwei Sendequellen ist und die in der Kombination von aktuellen Statusinformationen separat zugelassen ist; und
separates Anpassen der maximalen Sendeleistung jeder Sendequelle der mindestens zwei Sendequellen an die eingeschränkte Leistung jeder Sendequelle der mindestens zwei Sendequellen in der Kombination von aktuellen Statusinformationen (203), wobei das mobile Endgerät ferner ein Teilnehmerkennungsmodul, SIM,-Kartenmodul umfasst; und das Verfahren vor dem Abrufen einer Kombination von aktuellen Statusinformationen ferner umfasst:
Abrufen einer Mobil-Landeskennzahl, MCC, einer Primärkarte durch Verwenden des SIM-Kartenmoduls (401); und
wobei das Abrufen einer eingeschränkten Leistung jeder Sendequelle der mindestens zwei Sendequellen in der Kombination von aktuellen Statusinformationen und separate Anpassen der maximalen Sendeleistung jeder Sendequelle der mindestens zwei Sendequellen an die eingeschränkte Leistung jeder Sendequelle der mindestens zwei Sendequellen in der Kombination von aktuellen Statusinformationen umfasst:
Abrufen (403) einer eingeschränkten Leistung jeder Sendequelle der mindestens zwei Sendequellen, die sowohl der MCC als auch der Kombination von aktuellen Statusinformationen entspricht; und
separates Anpassen (404) der maximalen Sendeleistung jeder Sendequelle der mindestens zwei Sendequellen an die eingeschränkte Leistung jeder Sendequelle der mindestens zwei Sendequellen, die sowohl der MCC als auch der Kombination von aktuellen Statusinformationen entspricht.

2. Verfahren zur Anpassung von Sendeleistung nach Anspruch 1, wobei das Verfahren vor dem Abrufen einer Kombination von aktuellen Statusinformationen ferner umfasst:
Kombinieren von Status jeder Sendequelle der mindestens zwei Sendequellen, um mindestens zwei Statusinformationskombinationen zu erhalten (301), wobei die Statusinformationskombinationen einen Status jeder Sendequelle der mindestens zwei Sendequellen umfassen;
derartiges Anpassen von Sendeleistung jeder Sendequelle der mindestens zwei Sendequellen in jeder Statusinformationskombination (302), dass unter einer Vorbedingung, dass vom mobilen Endgerät erzeugte Strahlung einen SAR-Standardwert nicht überschreitet, die Sendeleistung jeder Sendequelle der mindestens zwei Sendequellen separat eine maximal zulässige Sendeleistung in jeder Statusinformationskombination erreicht; und
Festlegen (303) der angepassten Sendeleistung jeder Sendequelle der mindestens zwei Sendequellen in jeder Statusinformationskombination auf die eingeschränkte Leistung jeder Sendequelle der mindestens zwei Sendequellen.

3. Verfahren zur Anpassung von Sendeleistung nach Anspruch 1 oder 2, wobei
die Sendequelle ein Wireless Fidelity, WiFi,-Modul, ein Primärkartenmodem und ein Sekundärkartenmodem umfasst;
ein Status des WiFi-Moduls ein deaktivierter Zustand, ein WiFi-Verbindungszustand oder ein WiFi-Hotspot-Zustand ist;
ein Status des Primärkartenmodems ein Primärkarten-Nichtarbeitszustand oder ein Primärkarten-Arbeitszustand in verschiedenen Standards und verschiedenen Bändern ist; und
ein Status des Sekundärkartenmodems ein Sekundärkarten-Nichtarbeitszustand oder ein Sekundärkarten-Arbeitszustand in verschiedenen Standards und verschiedenen Bändern ist.

4. Verfahren zur Anpassung von Sendeleistung nach Anspruch 3, wobei das Abrufen einer Kombination von aktuellen Statusinformationen ferner umfasst:
Abrufen eines aktuellen Status eines jeden von dem WiFi-Modul, dem Primärkartenmodem und dem Sekundärkartenmodem (304); und
Bestimmen (305) der Kombination von aktuellen Statusinformationen mittels des aktuellen Status eines jeden von dem WiFi-Modul, dem Primärkartenmodem und dem Sekundärkartenmodem.

5. Softwareprodukt, das in einem computerlesbaren Speichermedium gespeichert ist und Anweisungen zum Anweisen eines Prozessors zum Ausführen aller Schritte des Verfahrens nach einem der Ansprüche 1 bis 4 umfasst.

6. Vorrichtung zur Anpassung von Sendeleistung, wobei die Vorrichtung auf ein mobiles Endgerät angewendet wird, das mobile Endgerät mindestens zwei Sendequellen umfasst, und die Vorrichtung umfasst:
eine Abrufeinheit (51), die konfiguriert ist zum: Abrufen einer Kombination von aktuellen Statusinformationen, wobei die Kombination von aktuellen Statusinformationen einen aktuellen Status jeder Sendequelle der mindestens zwei Sendequellen umfasst; Abrufen einer eingeschränkten Leistung jeder Sendequelle der mindestens zwei Sendequellen in der Kombination von aktuellen Statusinformationen, wobei unter einer Vorbedingung, dass vom mobilen Endgerät erzeugte Strahlung einen Standardwert einer spezifischen Absorptionsrate, SAR, nicht überschreitet, die eingeschränkte Leistung jeder Sendequelle der mindestens zwei Sendequellen eine maximale Sendeleistung ist, die von jeder Sendequelle der mindestens zwei Sendequellen ist und die in der Kombination von aktuellen Statusinformationen separat zugelassen ist, wobei die Abrufeinheit (51) ferner zum Abrufen einer Mobil-Landeskennzahl, MCC, einer Primärkarte durch Verwenden eines Teilnehmerkennungsmodul, SIM,-Kartenmoduls konfiguriert ist;
die Abrufeinheit (51) ferner so konfiguriert ist, dass sie eine eingeschränkte Leistung jeder Sendequelle der mindestens zwei Sendequellen abruft, die sowohl der MCC als auch der Kombination von aktuellen Statusinformationen entspricht; und
eine Anpassungseinheit (52), die so konfiguriert ist, dass sie die maximale Sendeleistung jeder Sendequelle der mindestens zwei Sendequellen separat an die eingeschränkte Leistung jeder Sendequelle der mindestens zwei Sendequellen in der Kombination von aktuellen Statusinformationen anpasst, die durch die Abrufeinheit (51) abgerufen werden, wobei die Anpassungseinheit (52) ferner so konfiguriert ist, dass sie die maximale Sendeleistung jeder Sendequelle der mindestens zwei Sendequellen separat an die eingeschränkte Leistung jeder Sendequelle der mindestens zwei Sendequellen anpasst, die sowohl der MCC als auch der Kombination von aktuellen Statusinformationen entspricht.

7. Vorrichtung zur Anpassung von Sendeleistung nach Anspruch 6, wobei die Vorrichtung ferner umfasst:
eine Kombinationseinheit (53), die so konfiguriert ist, dass sie Status jeder Sendequelle der mindestens zwei Sendequellen kombiniert, um mindestens zwei Statusinformationskombinationen zu erhalten, wobei die Statusinformationskombinationen einen Status jeder Sendequelle der mindestens zwei Sendequellen umfassen; wobei
die Anpassungseinheit (52) ferner so konfiguriert ist, dass sie Sendeleistung jeder Sendequelle der mindestens zwei Sendequellen in jeder Statusinformationskombination so anpasst, dass unter einer Vorbedingung, dass vom mobilen Endgerät erzeugte Strahlung einen SAR-Standardwert nicht überschreitet, die Sendeleistung jeder Sendequelle der mindestens zwei Sendequellen separat eine maximal zulässige Sendeleistung in jeder Statusinformationskombination erreicht; und
eine Festlegungs- und Bestimmungseinheit (54), die so konfiguriert ist, dass sie die durch die Anpassungseinheit (52) angepasste Sendeleistung jeder Sendequelle der mindestens zwei Sendequellen in jeder Statusinformationskombination auf die eingeschränkte Leistung jeder Sendequelle der mindestens zwei Sendequellen festlegt.

8. Vorrichtung zur Anpassung von Sendeleistung nach Anspruch 6 oder 7, wobei die Sendequelle ein Wireless Fidelity, WiFi,-Modul, ein Primärkartenmodem und ein Sekundärkartenmodem umfasst;
ein Status des WiFi-Moduls ein deaktivierter Zustand, ein WiFi-Verbindungszustand oder ein WiFi-Hotspot-Zustand ist;
ein Status des Primärkartenmodems ein Primärkarten-Nichtarbeitszustand oder ein Primärkarten-Arbeitszustand in verschiedenen Standards und verschiedenen Bändern ist; und
ein Status des Sekundärkartenmodems ein Sekundärkarten-Nichtarbeitszustand oder ein Sekundärkarten-Arbeitszustand in verschiedenen Standards und verschiedenen Bändern ist.

9. Vorrichtung zur Anpassung von Sendeleistung nach Anspruch 8, wobei
die Abrufeinheit (51) ferner zum Abrufen eines aktuellen Status eines jeden von dem WiFi-Modul, dem Primärkartenmodem und dem Sekundärkartenmodem konfiguriert ist; und
die Festlegungs- und Bestimmungseinheit (54) ferner zum Bestimmen der Kombination von aktuellen Statusinformationen mittels des durch die Abrufeinheit (51) abgerufenen aktuellen Status eines jeden von dem WiFi-Modul, dem Primärkartenmodem und dem Sekundärkartenmodem konfiguriert ist.

## Revendications

1. Procédé de réglage de puissance de transmission, dans lequel le procédé est appliqué à un terminal mobile, le terminal mobile comprend au moins deux sources de transmission et le procédé consiste :
à obtenir une combinaison d'informations d'état actuel (201), dans lequel la combinaison d'informations d'état actuel comprend un état actuel de chaque source de transmission des deux, ou plus, sources de transmission ;
à obtenir une puissance limitée de chaque source de transmission des deux, ou plus, sources de transmission dans la combinaison d'informations d'état actuel (202), dans lequel, selon une précondition qu'un rayonnement généré par le terminal mobile ne dépasse pas une valeur de taux d'absorption spécifique (SAR) standard, la puissance limitée de chaque source de transmission des deux, ou plus, sources de transmission, est une puissance de transmission maximale qui provient de chaque source de transmission des deux, ou plus, sources de transmission et qui est autorisée de manière distincte dans la combinaison d'informations d'état actuel ; et
à régler de manière distincte la puissance de transmission maximale de chaque source de transmission des deux, ou plus, sources de transmission à la puissance limitée de chaque source de transmission des deux, ou plus, sources de transmission dans la combinaison d'informations d'état actuel (203), dans lequel le terminal mobile comprend en outre un module de carte de module d'identification d'abonné (SIM) ; et avant l'obtention d'une combinaison d'informations d'état actuel, le procédé consiste en outre :
à obtenir un indicatif de pays de la station mobile (MCC) d'une carte primaire en utilisant le module de carte SIM (401) ; et
l'obtention de la puissance limitée de chaque source de transmission des deux, ou plus, sources de transmission dans la combinaison d'informations d'état actuel ; et le réglage de manière distincte de la puissance de transmission maximale de chaque source de transmission des deux, ou plus, sources de transmission à la puissance limitée de chaque source de transmission des deux, ou plus, sources de transmission dans la combinaison d'informations d'état actuel consistent :
à obtenir (403) une puissance limitée de chaque source de transmission des deux, ou plus, sources de transmission qui correspond à la fois à l'indicatif MCC et à la combinaison d'informations d'état actuel ; et
à régler de manière distincte (404) la puissance de transmission maximale de chaque source de transmission des deux, ou plus, sources de transmission à la puissance limitée de chaque source de transmission des deux, ou plus, sources de transmission qui correspond à la fois à l'indicatif MCC et à la combinaison d'informations d'état actuel.

2. Procédé de réglage de puissance de transmission selon la revendication 1, dans lequel, avant l'obtention d'une combinaison d'informations d'état actuel, le procédé consiste en outre :
à combiner des états de chaque source de transmission des deux, ou plus, sources de transmission pour obtenir au moins deux combinaisons d'informations d'état (301), dans lequel les combinaisons d'informations d'état comprennent un état de chaque source de transmission des deux, ou plus, sources de transmission ;
à régler la puissance de transmission de chaque source de transmission des deux, ou plus, sources de transmission dans chaque combinaison d'informations d'état (302) de telle sorte que, selon une précondition qu'un rayonnement généré par le terminal mobile ne dépasse pas une valeur de taux SAR standard, la puissance de transmission de chaque source de transmission des deux, ou plus, sources de transmission atteigne de manière distincte une puissance de transmission maximale permise dans chaque combinaison d'informations d'état ; et
à déterminer (303) la puissance de transmission réglée de chaque source de transmission des deux, ou plus, sources de transmission dans chaque combinaison d'informations d'état à la puissance limitée de chaque source de transmission des deux, ou plus, sources de transmission.

3. Procédé de réglage de puissance de transmission selon la revendication 1 ou 2, dans lequel
la source de transmission comprend un module de technologie Wi-Fi (Wi-Fi), un modem de carte primaire et un modem de carte secondaire ;
un état du module Wi-Fi est un état désactivé, un état de connexion Wi-Fi ou un état de point d'accès Wi-Fi ;
un état du modem de carte primaire est un état de non-fonctionnement de carte primaire ou un état de fonctionnement de carte primaire dans différentes normes et différentes bandes ; et
un état du modem de carte secondaire est un état de non-fonctionnement de carte secondaire ou un état de fonctionnement de carte secondaire dans différentes normes et différentes bandes.

4. Procédé de réglage de puissance de transmission selon la revendication 3, dans lequel l'obtention d'une combinaison d'informations d'état actuel consiste :
à obtenir un état actuel de chacun du module Wi-Fi, du modem de carte primaire et du modem de carte secondaire (304) ; et
à déterminer (305) la combinaison d'informations d'état actuel au moyen de l'état actuel de chacun du module Wi-Fi, du modem de carte primaire et du modem de carte secondaire.

5. Produit logiciel stocké dans un support de stockage lisible par ordinateur, comprenant des instructions pour donner comme instruction à un processeur de réaliser toutes les étapes du procédé selon l'une quelconque des revendications 1 à 4.

6. Appareil de réglage de puissance de transmission, dans lequel l'appareil est appliqué à un terminal mobile, le terminal mobile comprend au moins deux sources de transmission et l'appareil comprend :
une unité d'obtention (51), configurée : pour obtenir une combinaison d'informations d'état actuel, dans lequel la combinaison d'informations d'état actuel comprend un état actuel de chaque source de transmission des deux, ou plus, sources de transmission ;
pour obtenir une puissance limitée de chaque source de transmission des deux, ou plus, sources de transmission dans la combinaison d'informations d'état actuel, dans lequel, selon une précondition qu'un rayonnement généré par le terminal mobile ne dépasse pas une valeur de taux d'absorption spécifique (SAR) standard, la puissance limitée de chaque source de transmission des deux, ou plus, sources de transmission, est une puissance de transmission maximale qui provient de chaque source de transmission des deux, ou plus, sources de transmission et qui est autorisée de manière distincte dans la combinaison d'informations d'état actuel, dans lequel l'unité d'obtention (51) est en outre configurée pour obtenir un indicatif de pays de la station mobile (MCC) d'une carte primaire en utilisant un module de carte de module d'identification d'abonné (SIM) ;
l'unité d'obtention (51) est en outre configurée pour obtenir une puissance limitée de chaque source de transmission des deux, ou plus, sources de transmission qui correspond à la fois à l'indicatif MCC et à la combinaison d'informations d'état actuel ; et
une unité de réglage (52), configurée pour régler de manière distincte la puissance de transmission maximale de chaque source de transmission des deux, ou plus, sources de transmission à la puissance limitée de chaque source de transmission des deux, ou plus, sources de transmission dans la combinaison d'informations d'état actuel qui est obtenue par l'unité d'obtention (51), dans lequel l'unité de réglage (52) est en outre configurée pour régler de manière distincte la puissance de transmission maximale de chaque source de transmission des deux, ou plus, sources de transmission à la puissance limitée de chaque source de transmission des deux, ou plus, sources de transmission qui correspond à la fois à l'indicatif MCC et à la combinaison d'informations d'état actuel.

7. Appareil de réglage de puissance de transmission selon la revendication 6, dans lequel l'appareil comprend en outre :
une unité de combinaison (53), configurée pour combiner des états de chaque source de transmission des deux, ou plus, sources de transmission pour obtenir au moins deux combinaisons d'informations d'état, dans lequel les combinaisons d'informations d'état comprennent un état de chaque source de transmission des deux, ou plus, sources de transmission ; dans lequel
l'unité de réglage (52) est en outre configurée pour régler la puissance de transmission de chaque source de transmission des deux, ou plus, sources de transmission dans chaque combinaison d'informations d'état de telle sorte que, selon une précondition qu'un rayonnement généré par le terminal mobile ne dépasse pas une valeur de taux SAR standard, la puissance de transmission de chaque source de transmission des deux, ou plus, sources de transmission atteigne de manière distincte une puissance de transmission maximale permise dans chaque combinaison d'informations d'état ; et
une unité de détermination (54), configurée pour déterminer la puissance de transmission de chaque source de transmission des deux, ou plus, sources de transmission qui est réglée par l'unité de réglage (52) dans chaque combinaison d'informations d'état à la puissance limitée de chaque source de transmission des deux, ou plus, sources de transmission.

8. Appareil de réglage de puissance de transmission selon la revendication 6 ou 7, dans lequel
la source de transmission comprend un module de technologie Wi-Fi (Wi-Fi), un modem de carte primaire et un modem de carte secondaire ;
un état du module Wi-Fi est un état désactivé, un état de connexion Wi-Fi ou un état de point d'accès Wi-Fi ;
un état du modem de carte primaire est un état de non-fonctionnement de carte primaire ou un état de fonctionnement de carte primaire dans différentes normes et différentes bandes ; et
un état du modem de carte secondaire est un état de non-fonctionnement de carte secondaire ou un état de fonctionnement de carte secondaire dans différentes normes et différentes bandes.

9. Appareil de réglage de puissance de transmission selon la revendication 8, dans lequel l'unité d'obtention (51) est en outre configurée pour obtenir un état actuel de chacun du module Wi-Fi, du modem de carte primaire et du modem de carte secondaire ; et l'unité de détermination (54) est en outre configurée pour déterminer la combinaison d'informations d'état actuel au moyen de l'état actuel de chacun du module Wi-Fi, du modem de carte primaire et du modem de carte secondaire qui est obtenu par l'unité d'obtention (51).
